# FASCICULE DE BREVET EUROPEEN

(11) **EP 4 059 467 B1**
(45) Date de publication et mention de la délivrance du brevet: **23.08.2023**
(21) Numéro de dépôt: 21162975.3
(22) Date de dépôt: 16.03.2021
(51) Int. Cl.: A61C 8/00

(54) **EMBASE TRANSMUCOSALE A PASSAGE LONGITUDINAL TRAVERSANT AMELIORE**
TRANSMUKOSALE BASIS MIT VERBESSERTEM LÄNGSDURCHGANG
TRANSMUCOSAL BASE WITH IMPROVED LONGITUDINAL PASSAGE

(43) Date de publication de la demande: 21.09.2022
(73) Titulaire: ANTHOGYR, 74700 Sallanches (FR)
(72) Inventeur: RICHARD, Hervé, 73590 NOTRE DAME DE BELLECOMBE (FR)
(74) Mandataire: Cabinet Poncet

(56) Documents cités:
- WO-A1-2020/007616
- US-A1- 2019 117 346
- US-A1- 2020 046 468

## Description

### DOMAINE TECHNIQUE DE L'INVENTION

La présente invention concerne le domaine de la restauration dentaire, et concerne plus particulièrement une embase transmucosale pour la réception d'une prothèse dentaire sur un implant dentaire.

Généralement, une telle embase transmucosale s'étend selon une direction longitudinale entre une extrémité proximale et une extrémité distale, et comporte :
- un tronçon proximal conformé pour être reçu dans ou sur un implant dentaire,
- un tronçon distal conformé pour recevoir en appui une prothèse dentaire,
- un passage longitudinal traversant comprenant successivement un tronçon cylindrique amont, s'étendant en direction de l'extrémité proximale jusqu'à un siège limité par une paroi périphérique de siège et ayant une surface d'appui destinée à recevoir en appui axial la tête d'une vis, et un tronçon cylindrique aval limité par une paroi latérale et s'étendant depuis et à l'écart du siège en direction de l'extrémité distale.

Il est usuel de rapporter et fixer la prothèse dentaire sur une telle embase transmucosale, par exemple par collage, pour former un ensemble qui est ensuite rapporté et fixé sur ou dans un implant au moyen d'une vis de fixation.

Pour effectuer une maintenance de la prothèse dentaire, il est préférable d'être capable de séparer l'ensemble vis-à-vis de l'implant dentaire sans avoir à séparer la prothèse dentaire de l'embase transmucosale. Les efforts appliqués pour séparer la prothèse dentaire vis-à-vis de l'embase transmucosale d'un ensemble encore fixé sur un implant induiraient en effet des contraintes indésirables au niveau de l'implant, pouvant endommager son ostéo-intégration.

Une séparation aisée de l'ensemble vis-à-vis de l'implant dentaire peut être obtenue au moyen d'une prothèse dentaire à passage traversant permettant le passage de la vis de fixation tant pour son introduction que pour son retrait. On a alors recours à une prothèse dentaire comportant un passage traversant sensiblement formé par des premier et deuxième tronçons de passage successifs, ledit premier tronçon de passage s'étendant depuis une extrémité proximale de la prothèse dentaire sensiblement selon un premier axe longitudinal, et ledit deuxième tronçon de passage prolongeant le premier tronçon de passage sensiblement selon un deuxième axe longitudinal de telle sorte que les premier et deuxième tronçons de passage forment entre eux un angle non nul. L'extrémité proximale de la prothèse dentaire est destinée à venir en appui sur le tronçon distal de l'embase transmucosale.

Pour une restauration satisfaisante d'un point de vue esthétique, fonction notamment de la hauteur des tissus mous (muqueuse) du patient, l'embase transmucosale doit s'étendre selon des longueurs plus ou moins importantes selon la direction longitudinale.

Le document US2020046468 concerne une aide au modelage en deux parties qui peut être utilisée pour créer un composant prothétique, destiné à être utilisé avec un implant dentaire, ayant un canal de vis.

Le problème est que plus l'embase transmucosale est longue, plus sa vis de fixation à l'implant dentaire est longue. Et plus la vis est longue, plus l'angle entre les premier et deuxième tronçons de passage doit tendre vers zéro, ou plus les dimensions transversales de l'orifice du deuxième tronçon de passage doivent être grandes. On arrive alors vite à un diamètre exagérément grand de l'orifice du deuxième tronçon de passage, et à un positionnement de l'orifice du deuxième tronçon de passage en conflit avec les obstacles anatomiques que sont les cuspides ou le bord libre de la prothèse dentaire, rendant la restauration inesthétique (transparence) ou fragile en raison de parois trop fines.

### EXPOSE DE L'INVENTION

La présente invention est définie par les revendications.

Un problème proposé par la présente invention est de fournir une embase transmucosale facilitant le passage d'une vis de fixation à travers une prothèse dentaire.

Simultanément, l'invention vise à fournir une embase transmucosale permettant de réduire la dimension de l'orifice du deuxième tronçon de passage, et permettant d'augmenter les possibilités de placer l'orifice du deuxième tronçon de passage à l'écart des obstacles anatomiques (cuspides ou bord libre) de la prothèse dentaire.

Pour atteindre ces objets ainsi que d'autres, l'invention propose une embase transmucosale pour la réception d'une prothèse dentaire sur un implant dentaire, s'étendant selon une direction longitudinale entre une extrémité proximale et une extrémité distale, comportant :
- un tronçon proximal conformé pour être reçu dans ou sur un implant dentaire,
- un tronçon distal conformé pour recevoir en appui une prothèse dentaire,
- un passage longitudinal traversant comprenant successivement un tronçon cylindrique amont, s'étendant en direction de l'extrémité proximale jusqu'à un siège limité par une paroi périphérique de siège et ayant une surface d'appui destinée à recevoir en appui axial la tête d'une vis, et un tronçon cylindrique aval limité par une paroi latérale et s'étendant depuis et à l'écart du siège en direction de l'extrémité proximale ; selon l'invention, l'embase transmucosale comporte, dans le passage longitudinal traversant, un logement radial interne ménagé dans la paroi périphérique du siège et dans la paroi latérale du tronçon cylindrique aval.

Le logement radial interne permet de recevoir dans le passage longitudinal traversant l'extrémité libre de la tige filetée de la vis orientée de façon oblique, au-delà du siège (jusque dans une partie au moins du tronçon cylindrique aval). Le passage de vis à travers la prothèse dentaire s'en trouve facilité, avec un deuxième tronçon de passage dont l'orifice peut être placé plus à l'écart des cuspides ou du bord libre de la prothèse dentaire.

La réalisation du logement radial interne ne retire qu'une partie seulement de la paroi périphérique du siège, lequel reste tout à fait apte à recevoir en appui axial la tête de vis pour une retenue satisfaisante de l'embase transmucosale sur l'implant dentaire. De préférence, le siège peut comporter une surface d'appui qui est d'au moins 50% de la surface que le siège aurait eu en l'absence de logement radial interne.

Avantageusement, on peut prévoir que :
- le tronçon proximal s'évase progressivement en direction du tronçon distal,
- le siège est tronconique, évasé en direction du tronçon cylindrique amont, le logement radial interne étant en partie ménagé dans la paroi périphérique du siège.

L'évasement progressif du tronçon proximal reproduit sensiblement la forme de la racine d'une dent pour venir au contact des tissus mous (muqueuse) d'une manière similaire. La forme tronconique du siège augmente la surface de la paroi périphérique du siège contre laquelle peut venir en appui la tête de vis. Ceci est particulièrement avantageux compte tenu du logement radial interne qui vient diminuer quelque peu la surface de la paroi périphérique du siège. On obtient ainsi une meilleure répartition des efforts entre la tête de vis et l'embase transmucosale, et donc une meilleure fixation de l'embase transmucosale sur l'implant dentaire.

De préférence, on peut prévoir que :
- le tronçon distal comporte un prolongement axial se développant axialement à l'écart du siège selon une longueur et se développant selon un secteur angulaire,
- le prolongement axial est situé radialement en correspondance du logement radial interne.

Le prolongement axial du tronçon distal offre une surface d'engagement augmentée entre l'embase transmucosale et la prothèse dentaire pour une meilleure fixation de l'ensemble. La disposition du prolongement axial, (de préférence seulement) radialement en correspondance du logement radial interne, permet d'augmenter l'inclinaison de la vis à l'écart de la direction longitudinale lorsque l'extrémité libre de sa tige filetée vient s'engager dans le logement radial interne.

Avantageusement, le tronçon proximal peut comporter une portion axiale à section transversale extérieure non circulaire. On peut ainsi indexer en rotation la prothèse dentaire (autour de la direction longitudinale) par rapport à l'embase transmucosale pour garantir une disposition diamétralement opposée du logement radial interne et du deuxième tronçon de passage (laquelle favorise encore l'introduction de la vis). Pour ce faire, le premier tronçon de passage de la prothèse dentaire peut de préférence comporter une portion axiale à section transversale intérieure non circulaire, apte à coopérer avec la portion axiale à section transversale extérieure non circulaire du tronçon proximal de l'embase transmucosale pour indexer en rotation la prothèse dentaire par rapport à l'embase transmucosale.

De préférence, le tronçon distal peut comporter une portion axiale à section transversale extérieure non circulaire.

On peut ainsi indexer en rotation de façon fiable (autour de la direction longitudinale) l'embase transmucosale par rapport à l'implant dentaire, et par voie de conséquence la prothèse dentaire par rapport à l'implant dentaire lorsqu'une indexation en rotation est également prévue entre l'embase transmucosale et la prothèse dentaire.

Selon un autre aspect, la présente invention propose un ensemble comportant :
- une embase transmucosale telle que précédemment décrite,
- une vis.

Avantageusement, l'ensemble peut comporter en outre une prothèse dentaire destinée à être rapportée et fixée, ou préalablement rapportée et fixée, sur le tronçon distal de l'embase transmucosale, ladite prothèse dentaire comportant un passage traversant sensiblement formé par des premier et deuxième tronçons de passage successifs, ledit premier tronçon de passage s'étendant depuis une extrémité proximale de la prothèse dentaire sensiblement selon un premier axe longitudinal, et ledit deuxième tronçon de passage prolongeant le premier tronçon de passage sensiblement selon un deuxième axe longitudinal de telle sorte que les premier et deuxième tronçons de passage forment entre eux un angle non nul.

De préférence, par simplicité et souci de compacité, la prothèse dentaire peut être fixée sur l'embase transmucosale par collage.

Avantageusement, le premier tronçon de passage peut comporter une portion axiale à section transversale intérieure non circulaire, apte à coopérer avec la portion axiale à section transversale extérieure non circulaire du tronçon distal de l'embase transmucosale pour indexer en rotation la prothèse dentaire par rapport à l'embase transmucosale.

Selon un autre aspect, la présente invention propose un procédé de fabrication d'un ensemble destiné à être reçu dans ou sur un implant dentaire, comprenant les étapes suivantes :
a) fournir une embase transmucosale telle que précédemment décrite,
b) fournir une prothèse dentaire comportant un passage traversant sensiblement formé par des premier et deuxième tronçons de passage successifs, ledit premier tronçon de passage s'étendant depuis une extrémité proximale de la prothèse dentaire sensiblement selon un premier axe longitudinal, et ledit deuxième tronçon de passage prolongeant le premier tronçon de passage sensiblement selon un deuxième axe longitudinal de telle sorte que les premier et deuxième tronçons de passage forment entre eux un angle non nul,
c) rapporter et fixer la prothèse dentaire sur le tronçon distal de l'embase transmucosale.

De façon simple, lors de l'étape c), la prothèse dentaire peut être fixée sur l'embase transmucosale par collage.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
[Fig.1] La figure 1 est une vue en perspective d'une embase transmucosale selon un mode de réalisation particulier de la présente invention ;
[Fig.2] La figure 2 est une vue de côté de l'embase transmucosale de la figure 1 ;
[Fig.3] La figure 3 est une autre vue en perspective de l'embase transmucosale de la figure 1 ;
[Fig.4] La figure 4 est une vue en perspective d'une prothèse dentaire destinée à être reçue sur l'embase transmucosale de la figure 1 ;
[Fig.5] La figure 5 est une vue de côté et en coupe partielle d'un ensemble comprenant l'embase transmucosale de la figure 1, la prothèse dentaire de la figure 4 et une vis de fixation ;
[Fig.6] La figure 6 est une vue en perspective de l'ensemble de la figure 5 avec un implant dentaire ;
[Fig.7] La figure 7 est une vue en coupe de l'ensemble de la figure 5 positionné sur un implant dentaire, lors de l'introduction de la vis de fixation ; et
[Fig.8] La figure 8 est une vue en coupe de l'ensemble de la figure 5 positionné sur un implant dentaire, après vissage de la vis de fixation dans l'implant dentaire.

### DESCRIPTION DES MODES DE REALISATION PREFERES

Lorsque des références numériques identiques sont utilisées dans plusieurs figures, variantes ou modes de réalisation de l'invention, ces références numériques désignent des éléments identiques ou similaires dans chacune des figures, chacune des variantes ou chacun des modes de réalisation.

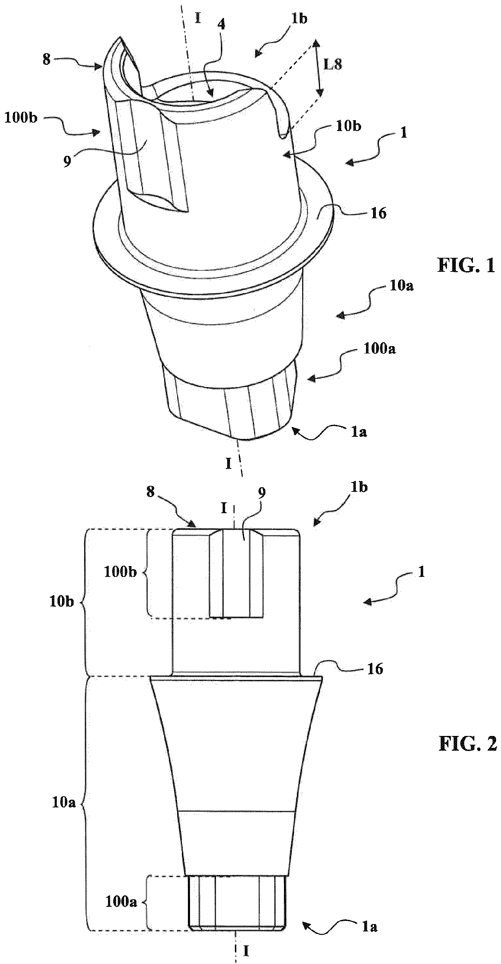

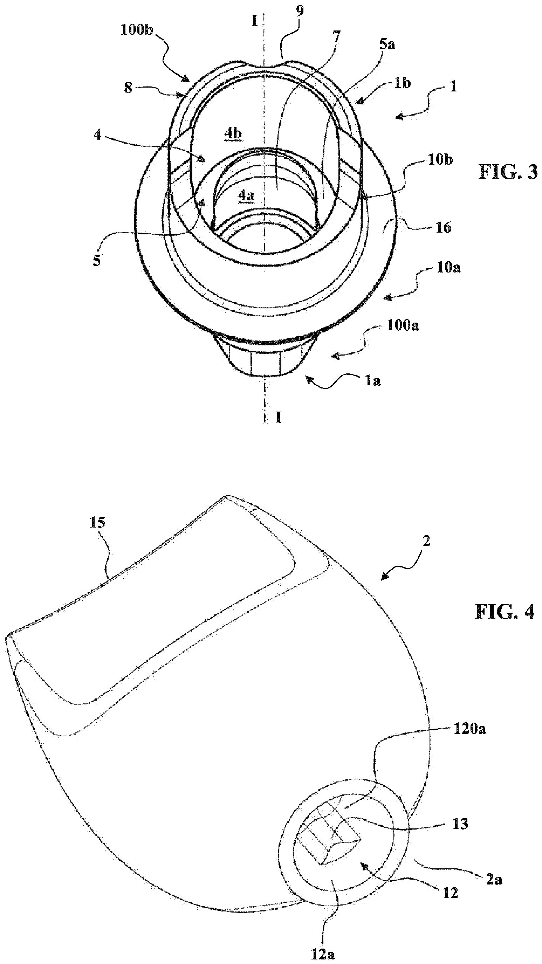

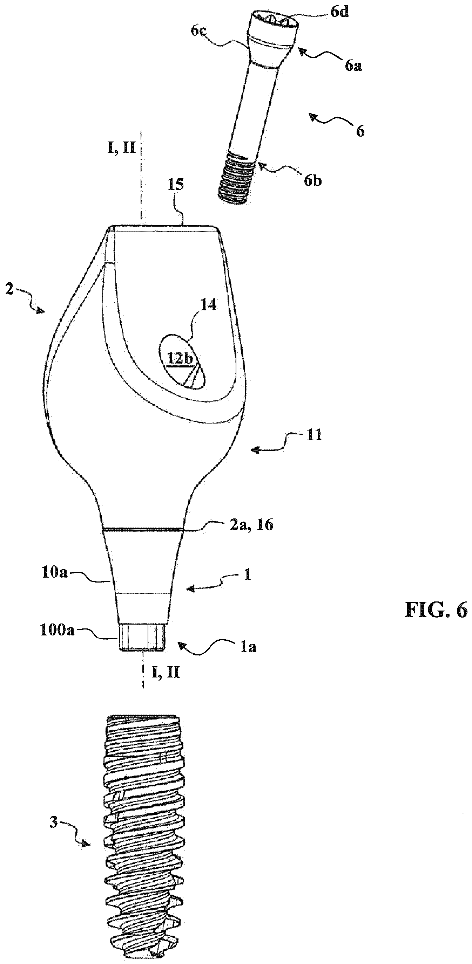

Sur la figure 1 est illustré un mode de réalisation particulier d'embase transmucosale 1 selon la présente invention, pour la réception d'une prothèse dentaire 2 (figures 4 à 8) sur un implant dentaire 3 (figures 6 à 8).

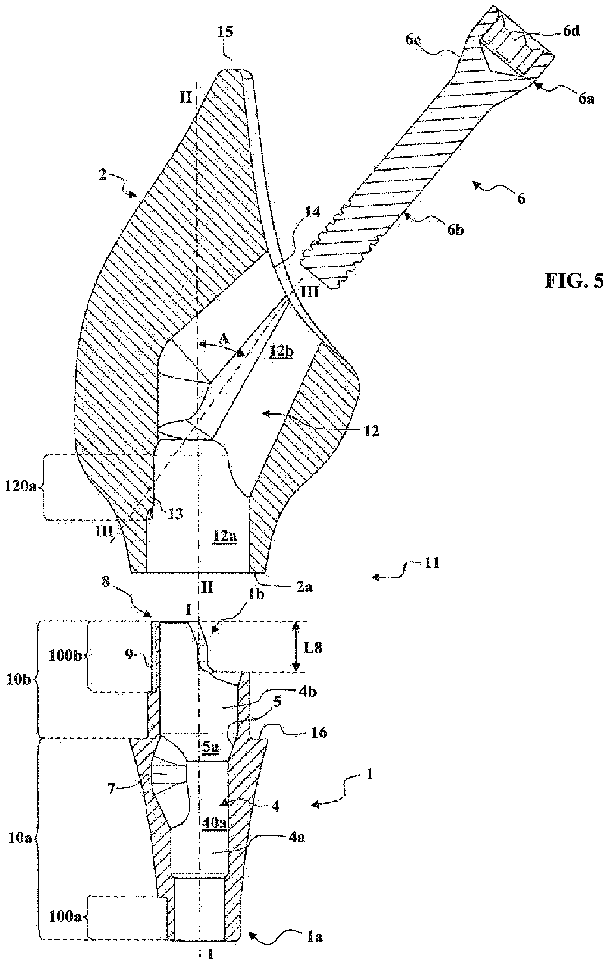

L'embase transmucosale 1 (figures 1 à 3 et 5 notamment) s'étend selon une direction longitudinale I-I entre une extrémité proximale 1a et une extrémité distale 1b, comportant :
- un tronçon proximal 10a conformé pour être reçu dans ou sur l'implant dentaire 3,
- un tronçon distal 10b conformé pour recevoir en appui la prothèse dentaire 2,
- un passage longitudinal traversant 4 comprenant successivement un tronçon cylindrique amont 4b, s'étendant en direction de l'extrémité proximale 1a jusqu'à un siège 5 limité par une paroi périphérique de siège 5a et ayant une surface d'appui destinée à recevoir en appui axial la tête 6a d'une vis 6 (figures 5 à 8), et un tronçon cylindrique aval 4a limité par une paroi latérale 40a et s'étendant depuis et à l'écart du siège 5 en direction de l'extrémité proximale 1a.

L'embase transmucosale 1 comporte, dans le passage longitudinal traversant 4, un logement radial interne 7 ménagé dans la paroi périphérique 5a du siège 5 et dans la paroi latérale 40a du tronçon cylindrique aval 4a.

Le tronçon distal 10b comporte une surface d'appui annulaire 16 destinée à recevoir en appui axial l'extrémité proximale 2a de la prothèse dentaire 2.

Sur la figure 5, on voit plus particulièrement que :
- le tronçon proximal 10a s'évase progressivement en direction du tronçon distal 10b,
- le siège 5 est tronconique, évasé en direction du tronçon cylindrique amont 4b, le logement radial interne 7 étant en partie ménagé dans la paroi périphérique 5a du siège 5.

La tête 6a de la vis 6 comporte un tronçon tronconique 6c complémentaire du siège 5 pour un appui homogène de la vis 6 sur la paroi périphérique de siège 5a.

On voit plus particulièrement sur les figures 1, 3 et 5 que le tronçon distal 10b comporte un prolongement axial 8 se développant axialement à l'écart du siège 5 selon une longueur L8 et se développant selon un secteur angulaire (ici d'environ 180 degrés). Le prolongement axial 8 se présente sensiblement sous la forme d'une paroi semi-tubulaire en arc de cercle.

Le prolongement axial 8 est situé radialement en correspondance du logement radial interne 7 (figures 3 et 5). En d'autres termes, le prolongement axial 8 est situé à l'aplomb, selon la direction longitudinale I-I, du logement radial interne 7.

Il est plus particulièrement visible sur les figures 1 à 3 que le tronçon proximal 10a comporte une portion axiale 100a à section transversale extérieure non circulaire. De façon plus spécifique, la portion axiale 100a a ici une section transversale extérieure sensiblement triangulaire à sommets arrondis. Cette section transversale extérieure non circulaire est destinée à coopérer avec une portion axiale 30a sensiblement complémentaire d'un logement femelle 3a de l'implant dentaire 3 afin d'indexer en rotation l'embase transmucosale 1 par rapport à l'implant dentaire 3 (autour de la direction longitudinale I-I).

II est plus particulièrement visible sur les figures 1 à 3 et 5 que le tronçon distal 10b comporte une portion axiale 100b à section transversale extérieure non circulaire. Cette section transversale extérieure non circulaire est ici procurée par une rainure axiale 9 ménagée sur l'extérieur du prolongement axial 8.

Le siège 5 comporte une surface d'appui qui est d'au moins 50% de la surface que le siège 5 aurait eu en l'absence de logement radial interne 7. Sur la figure 3, on voit que le siège 5 comporte une surface d'appui qui est même supérieure à 50% de la surface que le siège 5 aurait eu en l'absence de logement radial interne 7.

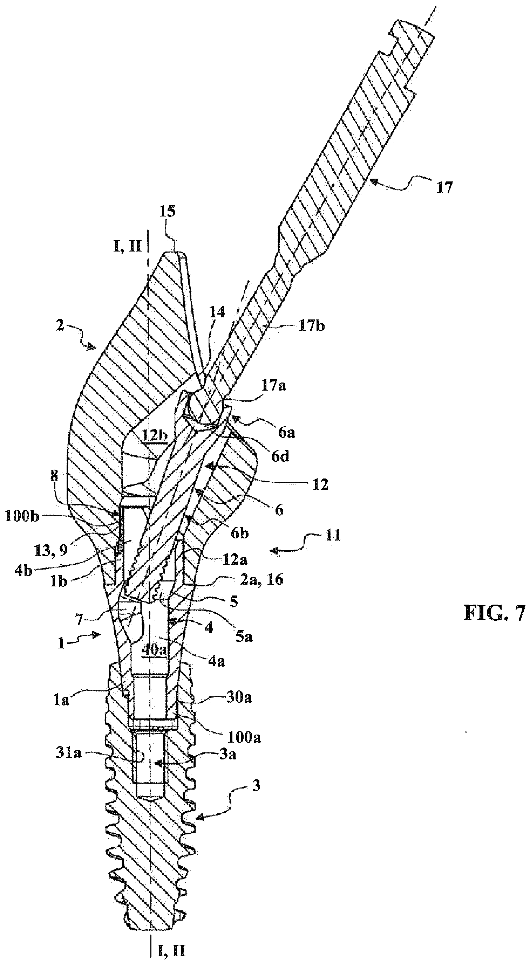

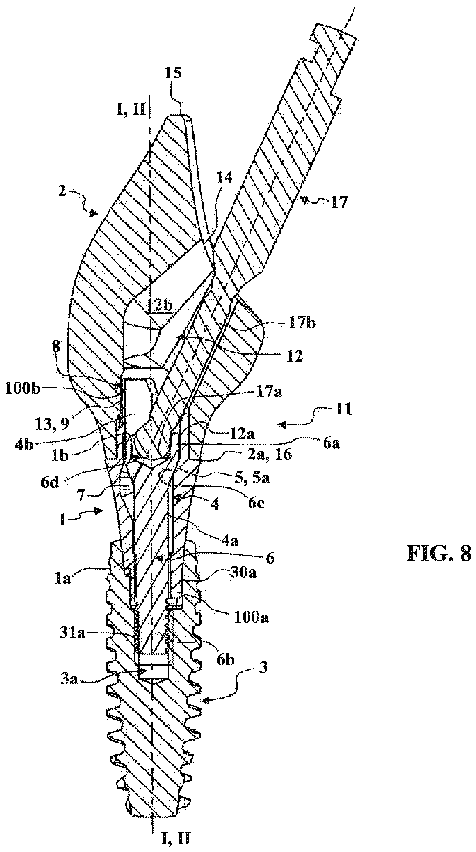

Sur la figure 5 est représenté un ensemble 11 comportant :
- une embase transmucosale 1,
- une vis 6 comprenant une tête de vis 6a et une tige filetée 6b destinée à être reçue par vissage dans l'implant dentaire 3 (dans une portion axiale filetée 31a du logement femelle 3a de l'implant 3, voir figures 7 et 8) pour fixer l'embase transmucosale 1 sur ledit implant dentaire 3.

L'ensemble 11 comporte en outre une prothèse dentaire 2 destinée à être rapportée et fixée, ou préalablement rapportée et fixée, sur le tronçon distal 10b de l'embase transmucosale 1.

Ladite prothèse dentaire 2 comportant un passage traversant 12 sensiblement formé par des premier 12a et deuxième 12b tronçons de passage successifs, ledit premier tronçon de passage 12a s'étendant depuis une extrémité proximale 2a de la prothèse dentaire 2 sensiblement selon un premier axe longitudinal II-II, et ledit deuxième tronçon de passage 12b prolongeant le premier tronçon de passage 12a sensiblement selon un deuxième axe longitudinal III-III de telle sorte que les premier 12a et deuxième 12b tronçons de passage forment entre eux un angle A non nul.

L'angle A permet par exemple de disposer l'orifice 14 du deuxième tronçon de passage 12b bien à l'écart du bord libre 15 de la prothèse dentaire 2.

La prothèse dentaire 2 est destinée à être fixée sur l'embase transmucosale 1, de préférence par collage.

On voit plus particulièrement sur les figures 4 et 5 que le premier tronçon de passage 12a comporte une portion axiale 120a à section transversale intérieure non circulaire. Cette section transversale intérieure non circulaire est plus spécifiquement procurée par une nervure axiale 13.

La section transversale intérieure non circulaire de la portion axiale 120a est plus particulièrement apte à coopérer avec la section transversale extérieure non circulaire de la portion axiale 100b du tronçon distal 10b de l'embase transmucosale 1 pour indexer en rotation la prothèse dentaire 2 par rapport à l'embase transmucosale 1.

A cet effet, lorsque la prothèse dentaire 2 est reçue sur l'embase transmucosale 1 par emmanchement (et collage) du tronçon distal 10b dans le premier tronçon de passage 12a, la nervure axiale 13 vient s'engager axialement dans la rainure axiale 9.

L'utilisation de l'embase transmucosale 1 par un praticien dentaire va désormais être plus particulièrement explicitée au moyen des figures 5 à 8.

On commence par fournir une embase transmucosale 1 selon l'invention et telle que précédemment décrite, dont la longueur (selon la direction longitudinale I-I) du tronçon proximal 10a est adaptée à la hauteur gingivale du patient. En pratique, il faut que le tronçon proximal 10a affleure sensiblement le niveau supérieur des tissus gingivaux.

On fournit également une prothèse dentaire 2 telle que précédemment décrite, à passage traversant 12. La prothèse dentaire 2 peut être par exemple fabriquée par usinage d'un bloc en céramique.

L'opérateur commence par rapporter et fixer la prothèse dentaire 2 sur l'embase transmucosale 1, de préférence par collage.

Il est ainsi mis en oeuvre un procédé de fabrication d'un ensemble 11 destiné à être reçu dans ou sur un implant dentaire 3, comprenant les étapes suivantes :
a) fournir une embase transmucosale 1 selon l'invention,
b) fournir une prothèse dentaire 2 comportant un passage traversant 12 sensiblement formé par des premier 12a et deuxième 12b tronçons de passage successifs, ledit premier tronçon de passage 12a s'étendant depuis une extrémité proximale 2a de la prothèse dentaire 2 sensiblement selon un premier axe longitudinal II-II, et ledit deuxième tronçon de passage 12b prolongeant le premier tronçon de passage 12a sensiblement selon un deuxième axe longitudinal III-III de telle sorte que les premier 12a et deuxième 12b tronçons de passage forment entre eux un angle A non nul, c) rapporter et fixer la prothèse dentaire 2 sur le tronçon distal 10b de l'embase transmucosale 1, de préférence par collage.

Lors de l'assemblage de la prothèse dentaire 2 sur l'embase transmucosale 1, l'extrémité proximale 2a de la prothèse dentaire 2 vient en appui axial sur le tronçon distal 10b de l'embase transmucosale 1 (plus particulièrement sur la surface d'appui annulaire 16), et les rainure 9 et nervure 13 axiales coopèrent pour immobiliser en rotation la prothèse dentaire 2 et l'embase transmucosale 1 l'une par rapport à l'autre selon la direction longitudinale I-I. Le tronçon distal 10b pénètre par emmanchement dans le premier tronçon de passage 12a pour reprendre efficacement les contraintes de basculement.

On parvient alors à l'ensemble 11 tel qu'illustré sur la figure 6.

Il est aussi fourni une vis 6 à tête de vis 6a et tige filetée 6b de longueur adaptée pour venir en prise par vissage dans la portion axiale filetée 31a du logement femelle 3a de l'implant dentaire 3 (situé en bouche du patient).

Le praticien rapporte l'ensemble 11 dans l'implant dentaire 3 en engageant la portion axiale 100a dans le logement intérieur femelle 3a de l'implant dentaire 3 pour immobiliser l'ensemble 11 par rapport à l'implant dentaire 3 autour de la direction longitudinale I-I.

Le praticien fait alors pénétrer la vis 6 dans le passage traversant 12 à travers l'orifice 14, en engageant la vis 6 selon une direction oblique par rapport à la direction longitudinale I-I (qui coïncide avec le premier axe longitudinal II-II).

L'extrémité libre de la tige filetée 6b pénètre dans le logement radial interne 7 pour autoriser la pénétration de la tête de vis 6a dans le passage traversant 12 et permettre à la vis 6 d'être ensuite redressée selon la direction longitudinale I-I.

Une fois redressée selon la direction longitudinale I-I, la vis 6 peut être entraînée en rotation par un outil de vissage 17 à tige 17b et à tête de vissage 17a à facettes, engagé dans le passage traversant 12. La tige filetée 6b pénètre alors par vissage dans la portion axiale filetée 31a.

L'outil de vissage 17 est ici semblable à celui décrit dans le document EP 2 607 722 A1, et la tête de vissage 17a à facettes s'engage dans une empreinte femelle 6d à six pans de la tête de vis 6a. La tête 17a de l'outil de vissage 17 permet une angulation entre la tige filetée de vis 6b et la tige 17b de l'outil de vissage 17 lors du vissage ou du dévissage (figure 8).

En fin de vissage, on se trouve dans la configuration illustrée sur la figure 8 : la tête de vis 6a est en appui contre le siège 5 et presse l'embase transmucosale 1 contre l'implant dentaire 3.

Le praticien peut alors retirer l'outil de vissage 17 et procède à un rebouchage de l'orifice 14 qui est orienté vers l'intérieur de la bouche du patient. L'orifice 14 est ainsi caché à la vue des autres personnes lorsque le patient sourit, procurant un esthétisme satisfaisant.

L'orifice 14 est ménagé à l'écart du bord libre 15 de la prothèse dentaire 2, lequel bénéficie ainsi d'une épaisseur de matière suffisamment importante pour résister aux contraintes de mastication, mais aussi pour présenter une teinte non affectée par un effet de transparence.

En l'absence du logement radial interne 7, l'angle A aurait été moindre et l'orifice 14 aurait dû être placé plus proche du bord libre 15 pour permettre l'insertion de la vis 6.

Si une opération de maintenance doit être effectuée sur la prothèse dentaire 2, il n'y a pas besoin de séparer la prothèse dentaire 2 de l'embase transmucosale 1 : après réouverture de l'orifice 14, on fait pénétrer l'outil de vissage 17 (comme illustré sur la figure 8) jusqu'à venir en prise dans la tête de vis 6a, puis on entraîne la vis 6 en rotation pour l'extraire du logement fileté de l'implant dentaire 3.

Après dévissage, on peut retirer l'ensemble 11 (qui est monobloc) hors de la bouche du patient pour procéder à la maintenance, et extraire aussi la vis 6 hors de l'ensemble 11.

La présente invention n'est pas limitée aux modes de réalisation qui ont été explicitement décrits, mais elle en inclut les diverses variantes et généralisations contenues dans le domaine des revendications ci-après.

## Revendications

1. - Embase transmucosale (1) pour la réception d'une prothèse dentaire (2) sur un implant dentaire (3), s'étendant selon une direction longitudinale (I-I) entre une extrémité proximale (1a) et une extrémité distale (1b), comportant :
- un tronçon proximal (10a) conformé pour être reçu dans ou sur un implant dentaire (3),
- un tronçon distal (10b) conformé pour recevoir en appui une prothèse dentaire (2),
- un passage longitudinal traversant (4) comprenant successivement un tronçon cylindrique amont (4b), s'étendant en direction de l'extrémité proximale (1a) jusqu'à un siège (5) limité par une paroi périphérique de siège (5a) et ayant une surface d'appui destinée à recevoir en appui axial la tête (6a) d'une vis (6), et un tronçon cylindrique aval (4a) limité par une paroi latérale (40a) et s'étendant depuis et à l'écart du siège (5) en direction de l'extrémité proximale (1a), **caractérisée en ce que** l'embase transmucosale (1) comporte, dans le passage longitudinal traversant (4), un logement radial interne (7) ménagé dans la paroi périphérique (5a) du siège (5) et dans la paroi latérale (40a) du tronçon cylindrique aval (4a).

2. - Embase transmucosale (1) selon la revendication 1, **caractérisée en ce que** :
- le tronçon proximal (10a) s'évase progressivement en direction du tronçon distal (10b),
- le siège (5) est tronconique, évasé en direction du tronçon cylindrique amont (4b), le logement radial interne (7) étant en partie ménagé dans la paroi périphérique (5a) du siège (5).

3. - Embase transmucosale (1) selon l'une des revendications 1 ou 2, **caractérisée en ce que** :
- le tronçon distal (10b) comporte un prolongement axial (8) se développant axialement à l'écart du siège (5) selon une longueur (L8) et se développant selon un secteur angulaire,
- le prolongement axial (8) est situé radialement en correspondance du logement radial interne (7).

4. - Embase transmucosale (1) selon l'une quelconque des revendications 1 à 3, **caractérisée en ce que** le tronçon proximal (10a) comporte une portion axiale (100a) à section transversale extérieure non circulaire.

5. - Embase transmucosale (1) selon l'une quelconque des revendications 1 à 4, **caractérisée en ce que** le tronçon distal (10b) comporte une portion axiale (100b) à section transversale extérieure non circulaire.

6. - Embase transmucosale (1) selon l'une quelconque des revendications 1 à 5, **caractérisée en ce que** le siège (5) comporte une surface d'appui qui est d'au moins 50% de la surface que le siège (5) aurait eu en l'absence de logement radial interne (7).

7. - Ensemble (11) comportant :
- une embase transmucosale (1) selon l'une quelconque des revendications 1 à 6,
- une vis (6).

8. - Ensemble (11) selon la revendication 7, comportant en outre une prothèse dentaire (2) destinée à être rapportée et fixée, ou préalablement rapportée et fixée, sur le tronçon distal (10b) de l'embase transmucosale (1), ladite prothèse dentaire (2) comportant un passage traversant (12) sensiblement formé par des premier (12a) et deuxième (12b) tronçons de passage successifs, ledit premier tronçon de passage (12a) s'étendant depuis une extrémité proximale (2a) de la prothèse dentaire (2) sensiblement selon un premier axe longitudinal (II-II), et ledit deuxième tronçon de passage (12b) prolongeant le premier tronçon de passage (12a) sensiblement selon un deuxième axe longitudinal (III-III) de telle sorte que les premier (12a) et deuxième (12b) tronçons de passage forment entre eux un angle (A) non nul.

9. - Ensemble (11) selon la revendication 8, **caractérisé en ce que** la prothèse dentaire (2) est fixée sur l'embase transmucosale (1) par collage.

10. - Ensemble (11) selon l'une des revendications 8 ou 9, **caractérisé en ce que** le premier tronçon de passage (12a) comporte une portion axiale (120a) à section transversale intérieure non circulaire, apte à coopérer avec la portion axiale (100b) à section transversale extérieure non circulaire du tronçon distal (10b) de l'embase transmucosale (1) pour indexer en rotation la prothèse dentaire (2) par rapport à l'embase transmucosale (1).

11. - Procédé de fabrication d'un ensemble destiné à être reçu dans ou sur un implant dentaire (3), comprenant les étapes suivantes :
a) fournir une embase transmucosale (1) selon l'une quelconque des revendications 1 à 6,
b) fournir une prothèse dentaire (2) comportant un passage traversant (12) sensiblement formé par des premier (12a) et deuxième (12b) tronçons de passage successifs, ledit premier tronçon de passage (12a) s'étendant depuis une extrémité proximale (2a) de la prothèse dentaire (2) sensiblement selon un premier axe longitudinal (II-II), et ledit deuxième tronçon de passage (12b) prolongeant le premier tronçon de passage (12a) sensiblement selon un deuxième axe longitudinal (III-III) de telle sorte que les premier (12a) et deuxième (12b) tronçons de passage forment entre eux un angle (A) non nul,
c) rapporter et fixer la prothèse dentaire (2) sur le tronçon distal (10b) de l'embase transmucosale (1).

12. - Procédé selon la revendication 11, **caractérisé en ce que**, lors de l'étape c), la prothèse dentaire (2) est fixée sur l'embase transmucosale (1) par collage.

## Patentansprüche

1. Transmukosale Basis (1) zur Aufnahme einer Zahnprothese (2) auf einem Zahnimplantat (3), die sich entlang einer Längsrichtung (I-I) zwischen einem proximalen Ende (1a) und einem distalen Ende (1b) erstreckt, aufweisend:
- einen proximalen Abschnitt (10a), der so angepasst ist, dass er in oder auf einem Zahnimplantat (3) aufgenommen werden kann,
- einen distalen Abschnitt (10b), der so angepasst ist, dass er eine Zahnprothese (2) stützt,
- einen Längsdurchgang (4), der nacheinander einen stromaufwärtigen zylindrischen Abschnitt (4b), der sich in Richtung des proximalen Endes (1a) bis zu einem Sitz (5) erstreckt, der durch eine periphere Wand des Sitzes (5a) begrenzt ist und eine Stützfläche hat, die dazu bestimmt ist, den Kopf (6a) einer Schraube (6) in axialer Abstützung aufzunehmen, und einen stromabwärtigen zylindrischen Abschnitt (4a) umfasst, der durch eine Seitenwand (40a) begrenzt ist und sich vom und mit Abstand zu dem Sitz (5) in Richtung des proximalen Endes (1a) erstreckt, **dadurch gekennzeichnet, dass** die transmukosale Basis (1) im Längsdurchgang (4) ein inneres radiales Lager (7) aufweist, das in der peripheren Wand (5a) des Sitzes (5) und in der Seitenwand (40a) des stromabwärtigen zylindrischen Abschnitts (4a) ausgebildet ist.

2. Transmukosale Basis (1) nach Anspruch 1, **dadurch gekennzeichnet, dass**:
- der proximale Abschnitt (10a) sich progressiv in Richtung des distalen Abschnitts (10b) erweitert,
- der Sitz (5) kegelstumpfförmig ist und sich in Richtung des stromaufwärtig gelegenen zylindrischen Abschnitts (4b) erweitert, wobei das innere radiale Lager (7) teilweise in der peripheren Wand (5a) des Sitzes (5) ausgebildet ist.

3. Transmukosale Basis (1) nach einem der Ansprüche 1 oder 2, **dadurch gekennzeichnet, dass**:
- der distale Abschnitt (10b) eine axiale Verlängerung (8) aufweist, die sich entlang einer Länge (L8) axial mit Abstand zum Sitz (5) und entlang eines Winkelsektors erstreckt,
- die axiale Verlängerung (8) radial in Übereinstimmung mit dem inneren radialen Lager (7) angeordnet ist.

4. Transmukosale Basis (1) nach einem der Ansprüche 1 bis 3, **dadurch gekennzeichnet, dass** der proximale Abschnitt (10a) einen axialen Abschnitt (100a) mit einem nicht kreisförmigen Außenquerschnitt aufweist.

5. Transmukosale Basis (1) nach einem der Ansprüche 1 bis 4, **dadurch gekennzeichnet, dass** der distale Abschnitt (10b) einen axialen Abschnitt (100b) mit einem nicht kreisförmigen Außenquerschnitt aufweist.

6. Transmukosale Basis (1) nach einem der Ansprüche 1 bis 5, **dadurch gekennzeichnet, dass** der Sitz (5) eine Stützfläche aufweist, die mindestens 50 % der Oberfläche ausmacht, die der Sitz (5) in Abwesenheit des radialen Lagers (7) hätte.

7. Baugruppe (11) aufweisend:
- eine transmukosale Basis (1) nach einem der Ansprüche 1 bis 6,
- eine Schraube (6).

8. Baugruppe (11) nach Anspruch 7, die außerdem eine Zahnprothese (2) aufweist, die dazu bestimmt ist, am distalen Abschnitt (10b) der transmukosalen Basis (1) angebracht und fixiert zu werden oder zuvor angebracht und fixiert zu werden, wobei besagte Zahnprothese (2) einen Durchgangskanal (12) aufweist, der im Wesentlichen durch erste (12a) und zweite (12b) aufeinanderfolgende Durchgangsabschnitte gebildet wird, wobei sich der besagte erste Durchgangsabschnitt (12a) von einem proximalen Ende (2a) der Zahnprothese (2) im Wesentlichen entlang einer ersten Längsachse (II-II) erstreckt und der besagte zweite Durchgangsabschnitt (12b) den ersten Durchgangsabschnitt (12a) im Wesentlichen entlang einer zweiten Längsachse (III-III) verlängert, so dass der erste (12a) und der zweite (12b) Durchgangsabschnitt zwischen sich ein Winkel ungleich Null (A) bilden.

9. Baugruppe (11) nach Anspruch 8, **dadurch gekennzeichnet, dass** die Zahnprothese (2) durch Kleben an der transmukosalen Basis (1) fixiert ist.

10. Baugruppe (11) nach einem der Ansprüche 8 oder 9, **dadurch gekennzeichnet, dass** der erste Durchgangsabschnitt (12a) einen axialen Abschnitt (120a) mit einem nicht kreisförmigen Innenquerschnitt aufweist, der in der Lage ist, mit dem axialen Abschnitt (100b) mit nicht kreisförmigem Außenquerschnitt des distalen Abschnitts (10b) der transmukosalen Basis (1) zum Indizieren der Zahnprothese (2) in Rotation relativ zu der transmukosalen Basis (1) zusammenzuwirken.

11. Verfahren zur Herstellung einer Baugruppe zur Aufnahme in oder auf einem Zahnimplantat (3), umfassend die folgenden Schritte:
a) Bereitstellen einer transmukosalen Basis (1) nach einem der Ansprüche 1 bis 6,
b) Bereitstellen einer Zahnprothese (2), die einen Durchgang (12) aufweist, der im Wesentlichen durch erste (12a) und zweite (12b) aufeinanderfolgende Durchgangsabschnitte gebildet wird, wobei sich der besagte erste Durchgangsabschnitt (12a) von einem proximalen Ende (2a) der Zahnprothese (2) im Wesentlichen entlang einer ersten Längsachse (II-II) erstreckt und der besagte zweite Durchgangsabschnitt (12b) den ersten Durchgangsabschnitt (12a) im Wesentlichen entlang einer zweiten Längsachse (III-III) verlängert, so dass der erste (12a) und zweite (12b) Durchgangsabschnitt zwischen sich ein Winkel ungleich Null (A) bilden,
c) Anbringen und Fixieren der Zahnprothese (2) am distalen Abschnitt (10b) der transmukosalen Basis (1).

12. Verfahren nach Anspruch 11, **dadurch gekennzeichnet, dass** im Schritt c) die Zahnprothese (2) durch Kleben an der transmukosalen Basis (1) fixiert wird.

## Claims

1. Transmucosal base (1) for receiving a dental prosthesis (2) on a dental implant (3), extending in a longitudinal direction (I-I) between a proximal end (1a) and a distal end (1b), comprising:
- a proximal portion (10a) shaped to be received in or on a dental implant (3),
- a distal portion (10b) shaped to support a dental prosthesis (2),
- a longitudinal through-passage (4) successively comprising an upstream cylindrical portion (4b) extending in the direction of the proximal end (1a) as far as a seating (5) bounded by a seating peripheral wall (5a) and having a bearing surface intended to have the head (6a) of a screw (6) bearing axially against it, and a downstream cylindrical portion (4a) bounded by a lateral wall (40a) and extending from and away from the seating (5) in the direction of the proximal end (1a), **characterized in that** the transmucosal base (1) comprises, in the longitudinal through-passage (4), an internal radial housing (7) formed in the peripheral wall (5a) of the seating (5) and in the lateral wall (40a) of the downstream cylindrical portion (4a).

2. Transmucosal base (1) according to Claim 1, **characterized in that**:
- the proximal portion (10a) is progressively flared in the direction of the distal portion (10b),
- the seating (5) is frustoconical, flaring in the direction of the upstream cylindrical portion (4b), the internal radial housing (7) being formed in part in the peripheral wall (5a) of the seating (5) .

3. Transmucosal base (1) according to one of Claims 1 and 2, **characterized in that**:
- the distal portion (10b) comprises an axial extension (8) extending axially away from the seating (5) over a length (L8) and extending over an angular sector,
- the axial extension (8) is situated radially in register with the internal radial housing (7).

4. Transmucosal base (1) according to any one of Claims 1 to 3, **characterized in that** the proximal portion (10a) comprises an axial part (100a) of non-circular exterior cross section.

5. Transmucosal base (1) according to any one of Claims 1 to 4, **characterized in that** the distal portion (10b) comprises an axial part (100b) of non-circular exterior cross section.

6. Transmucosal base (1) according to any one of Claims 1 to 5, **characterized in that** the seating (5) has a bearing surface which represents at least 50% of the surface that the seating (5) would have had in the absence of the internal radial housing (7).

7. Assembly (11) comprising:
- a transmucosal base (1) according to any one of Claims 1 to 6,
- a screw (6).

8. Assembly (11) according to Claim 7, further comprising a dental prosthesis (2) intended to be mounted and fixed, or pre-mounted and pre-fixed, on the distal portion (10b) of the transmucosal base (1), said dental prosthesis (2) comprising a through-passage (12) substantially formed by first (12a) and second (12b) successive passage portions, said first passage portion (12a) extending from a proximal end (2a) of the dental prosthesis (2) substantially along a first longitudinal axis (II-II) and said second passage portion (12b) extending the first passage portion (12a) substantially along a second longitudinal axis (III-III) such that the first (12a) and second (12b) passage portions make between them a non-zero angle (A).

9. Assembly (11) according to Claim 8, **characterized in that** the dental prosthesis (2) is fixed on the transmucosal base (1) by adhesive bonding.

10. Assembly (11) according to one of Claims 8 and 9, **characterized in that** the first passage portion (12a) comprises an axial part (120a) of non-circular interior cross section, able to collaborate with the axial part (100b) of non-circular exterior cross section of the distal portion (10b) of the transmucosal base (1) so as to index the dental prosthesis (2) in terms of rotation relative to the transmucosal base (1).

11. Method for manufacturing an assembly intended to be received in or on a dental implant (3), comprising the following steps:
a) supplying a transmucosal base (1) according to any one of Claims 1 to 6,
b) supplying a dental prosthesis (2) comprising a through-passage (12) substantially formed by first (12a) and second (12b) successive passage portions, said first passage portion (12a) extending from a proximal end (2a) of the dental prosthesis (2) substantially along a first longitudinal axis (II-II) and said second passage portion (12b) extending the first passage portion (12a) substantially along a second longitudinal axis (III-III) such that the first (12a) and second (12b) passage portions make between them a non-zero angle (A),
c) mounting and fixing the dental prosthesis (2) on the distal portion (10b) of the transmucosal base (1).

12. Method according to Claim 11, **characterized in that**, during step c), the dental prosthesis (2) is fixed on the transmucosal base (1) by adhesive bonding.
